(19)

Europäisches
Patentamt
European
Patent Office
Office européen
des brevets

(11) EP 3 182 627 A1

(12) EUROPEAN PATENT APPLICATION

(43) Date of publication:
21.06.2017 Bulletin 2017/25

(51) Int Cl.:
$H04L\ 1/00$ (2006.01)  $H04L\ 1/20$ (2006.01)
$H04L\ 29/06$ (2006.01)

(21) Application number: 15307061.0

(22) Date of filing: 18.12.2015

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(71) Applicant: Orange
75015 Paris (FR)

(72) Inventor: BEARDOW, Paul
Easton, S021 IEN (GB)

(74) Representative: Cabinet Plasseraud
66 rue de la Chaussée d'Antin
75440 Paris Cedex 09 (FR)

(54) METHOD FOR IMPLEMENTING AN ERROR CORRECTION STRATEGY IN A COMMUNICATION BETWEEN TWO DEVICES

(57)    A method for communicating multimedia data between a first device and a second device over a network (N), the first device (A) receiving an inbound stream (ISA) of multimedia data from the second device (B) and sending an outbound stream (OSA) of multimedia data to the second device, the first device being adapted for applying an outbound error correction scheme to the outbound stream, the second device (B) being adapted for applying an inbound error correction scheme to the inbound stream.

The method comprises the steps of:
- generating inbound error correction scheme effectiveness data ($ED_{ISA}$) being representative of an effectiveness of the inbound error correction scheme on said quality,
- generating, based on quality of service data sent by device B, outbound error correction scheme effectiveness data ($ED_{OSA}$) indicative of an effectiveness of the outbound error correction scheme, and
- modifying the outbound error correction scheme as a function of said inbound error correction scheme effectiveness data and outbound error correction scheme effectiveness data.

$ED_{ISA}$ ($j_{ISA}$, $l_{ISA}$, $pl_{ISA}$, $eff_{ISA}$, $pc_{ISA}$, $ec_{ISA}$)

$ED_{OSA}$ ($j_{OSA}$, $l_{OSA}$, $pl_{OSA}$, $eff_{OSA}$, $pc_{OSA}$, $ec_{OSA}$)

FIG. 1

**Description**

In the context of communication between devices with a view to exchange real-time multimedia data such as audio, video or game data, the approach is often to use a lightweight, but potentially unreliable transport protocol, such as UDP (User Datagram Protocol). UDP exposes the data streams to the unreliability of the underlying network. As a consequence, there is no guarantee of delivery, ordering, or duplicate protection under UDP, so although data arrives quickly, it may not arrive at all or may arrive in an unexpected order.

UDP is chosen because some applications as the ones mentioned above prefer timely delivery of information over delayed information and therefore perform error correction within applications rather than at the network level. The timely delivery is particularly important for applications where there is a bidirectional data flow, such as voice or video calls, or multi-player gaming where there can be multiple streams passing in either direction. Delays of above a few hundreds of milliseconds (for instance greater than 0.25 second) are very noticeable as lag and can confuse speakers or seriously affect gameplay.

Error correction strategies can be applied to these streams to compensate for these phenomena, these strategies including for instance a Forward Error Correction (known as FEC) through which at least some of the data packets include redundant information for reconstructing missing packets, and a bit replication strategy through which data packets are replicated to increase the chance of their timely arrival.

However, all these strategies have a cost in terms of processing resources being mobilized and occupied bandwidth. Care must therefore be taken to avoid using them when they are not necessary.

A typical approach employed in such a perspective of increasing the quality of a communication between two devices consists in applying a given correction strategy for each of the streams that are exchanged between the devices, i.e. for a given device, an inbound stream sent by the other device and the outbound stream sent to the other device. On each stream, the corresponding strategy may be adapted to adjust to changing conditions, for instance through an evaluation of the strategies being employed.

This approach presents drawbacks. In fact, this approach is costly in terms of resources dedicated to the management of the strategies, and may be of unsatisfactory efficiency.

The present invention aims at providing an improved solution for the management of the quality of a bidirectional communication between at least two devices.

To that end, the invention relates to a method for communicating multimedia data between a first device and a second device over a network, the first device receiving an inbound stream of multimedia data from the second device and sending an outbound stream of multimedia data to the second device, the first device being adapted for applying an outbound error correction scheme to the outbound stream for improving a quality of the communication between the first and second devices, said outbound error correction scheme being adapted to comprise at least one outbound error correction strategy applied to said outbound stream for correcting data packet errors in the outbound stream, the second device being adapted for applying an inbound error correction scheme to the inbound stream for improving said quality, said inbound error correction scheme being adapted to comprise at least one inbound error correction strategy applied to said inbound stream for correcting data packet errors in the inbound stream, the method comprising the steps of:

- generating inbound error correction scheme effectiveness data as a function of the multimedia data of the inbound stream, said inbound error correction scheme effectiveness data being representative of an effectiveness of the inbound error correction scheme on said quality,

- receiving quality of service data from the second device, said quality of service data being indicative of the quality of the communication,

- generating, based on said quality of service data, outbound error correction scheme effectiveness data indicative of an effectiveness of the outbound error correction scheme on said quality, and

- modifying the outbound error correction scheme as a function of said inbound error correction scheme effectiveness data and outbound error correction scheme effectiveness data.

According to a further aspect of the invention, prior to modifying the outbound error correction scheme, the inbound error correction scheme comprises at least one inbound error correction strategy applied to the inbound stream, and modifying the outbound error correction scheme comprises applying the inbound error correction strategy to the outbound stream.

According to a further aspect of the invention, prior to modifying the outbound error correction scheme, the outbound correction scheme comprises at least one outbound error correction strategy, and modifying the outbound error correction scheme comprises applying the inbound error correction strategy to the outbound stream instead of the outbound error correction strategy.

According to a further aspect of the invention, the inbound error correction scheme effectiveness data comprise:

- an inbound jitter parameter having a value indicative of a jitter affecting the inbound stream,

- an inbound latency parameter having a value indicative of a latency of the inbound stream, and

- an inbound packet loss parameter having a value indicative of a packet loss affecting data packets of the inbound stream.

According to a further aspect of the invention, the inbound error correction scheme effectiveness data further comprise an inbound effectiveness parameter having a value determined as a function of a ratio between a number of corrected data packets of the inbound stream using the inbound error correction scheme, and a number of errors in data packets of the inbound stream.

According to a further aspect of the invention, the outbound error correction scheme effectiveness data comprise:

- an outbound jitter parameter having a value indicative of a jitter affecting the outbound stream,

- an outbound latency parameter having a value indicative of a latency of the outbound stream, and

- an outbound packet loss parameter having a value indicative of a packet loss affecting data packets of the outbound stream.

According to a further aspect of the invention, the outbound error correction scheme effectiveness data further comprise an outbound effectiveness parameter having a value determined as a function of a ratio between a number of corrected data packets of the outbound stream using the outbound error correction scheme, and a number of errors in data packets of the outbound stream.

According to a further aspect of the invention, modifying the outbound error correction scheme comprises determining that the outbound error correction scheme needs modifying as a function of at least a verification of an effectiveness condition, said effectiveness condition being verified when a difference between the value of the inbound effectiveness parameter and the value of the outbound effectiveness parameter is equal or greater than a predetermined threshold.

According to a further aspect of the invention, modifying the outbound error correction scheme comprises determining that the outbound error correction scheme needs modifying as a function of at least a verification of a similarity condition, said similarity condition being representative of a fact that a quality of the communication for the first device and a quality of the communication for the second device are within a predetermined range from one another.

According to a further aspect of the invention, the similarity condition is fulfilled when a sum of respective relatives gaps between:

- the value of the outbound jitter parameter and the value of the inbound jitter parameter,

- the value of the outbound latency parameter and the value of the inbound latency parameter, and

- the value of the outbound packet loss parameter and the value of the inbound packet loss parameter,

is equal or inferior to a predetermined value.

According to a further aspect of the invention, the quality of service data comprise Real-time Transport Control Protocol data, or RTCP data, arranged in RTCP reports repeatedly sent by the second device to the first device.

The invention also relates to a computer program containing instructions for the implementation of the method according to any one of the preceding claims when executed by a processor.

The invention further relates to a quality of service management module adapted to manage a quality of communication of multimedia data between a first device and a second device over a network, the first device being configured to receive an inbound stream of multimedia data from the second device and to send an outbound stream of multimedia data to the second device, the first device being adapted for applying an outbound error correction scheme to the outbound stream for improving a quality of the communication between the first and second devices, said outbound error correction scheme being adapted to comprise at least one outbound error correction strategy applied to said outbound stream for correcting data packet errors in the outbound stream, the second device being adapted for applying an inbound error correction scheme to the inbound stream for improving said quality, said inbound error correction scheme being adapted to comprise at least one inbound error correction strategy applied to said inbound stream for correcting data packet errors in the inbound stream, the quality of service management module being configured to:

- generate inbound error correction scheme effectiveness data as a function of the multimedia data of the inbound stream, said inbound error correction scheme effectiveness data being representative of an effectiveness of the inbound error correction strategy,

- generate outbound error correction scheme effectiveness data indicative of an effectiveness of the outbound error correction scheme based on quality of service data sent by the second device, said quality of service data being indicative of the quality of the communication,

- modify the outbound error correction scheme as a function of said inbound error correction scheme effectiveness data and outbound error correction scheme effectiveness data.

The invention further relates to a communication device comprising a quality of service management module as defined above.

Further features and advantages of the invention will become more apparent by reading the following detailed description of the embodiments, which are given by way of non-limiting examples with reference to the appended drawings, in which:

- Figure 1 illustrates a communication between two devices according to the invention;
- Figure 2 illustrates a flow diagram of a method for implementing error correction strategies in a communication between the two devices of Figure 1; and

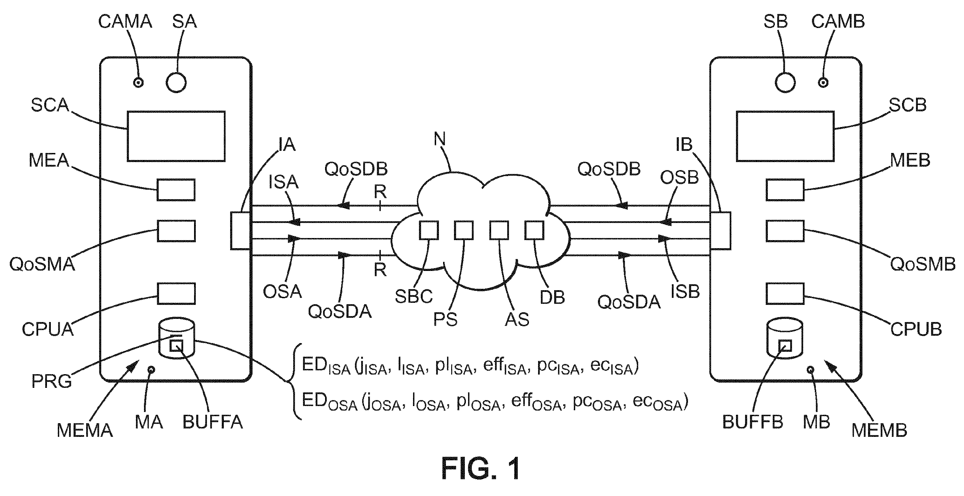

Figure 1 illustrates a first device A and a second device B in communication over a network N. For instance, the network N comprises a Session Border Controller SBC to which the devices are connected, a proxy server PS exchanging messages with the controller SBC using the Session Initiation Protocol (SIP) and connected to an Accounting Server AS managing the minute counting and itself connected to a Subscriber Database DB.

In the context of the invention, the devices exchange multimedia data. For instance, the multimedia data comprise audio data and/or video data. For instance, the devices exchange audio data, the two devices and the network N forming a Voice over IP system, or VoIP system.

The multimedia data are in the form of packets exchanged between the devices A and B using RTP, for Real-Time Transport Protocol. For instance, the packets of multimedia data rely on UDP, or User Datagram Protocol. In other words, the packets of multimedia data are UDP packets.

Each device A, B receives the multimedia data from the other device B, A in the form of an inbound stream ISA, ISB, and sends the multimedia data to the other device B, A in the form of an outbound stream OSB.

As illustrated in Figure 1, the inbound stream of a given device corresponds to the outbound stream of the other device. For instance, the inbound stream ISA received by device A corresponds to the outbound stream OSB sent by device B.

In the context of the invention, in view of improving the quality of the communication between the two devices, the devices A, B are adapted to apply an error correction scheme to the stream they send to the other device.

From device A's point of view, device A applies an outbound error correction scheme to the outbound stream OSA, and device B applies an inbound correction scheme to the inbound stream ISA.

The outbound error correction scheme is specifically configured to increase the quality of the communication for device B, i.e. as perceived by device B. The inbound error correction scheme is specifically configured to increase the quality of the communication for device A, i.e. as perceived by device A.

The error correction schemes are adapted to comprise at least one error correction strategy for correcting errors affecting data packet of the corresponding stream.

For device A, the error correction strategy (or strategies) applied to the outbound stream OSA (by device A) constitutes an outbound error correction strategy. The error correction strategy (or strategies) applied to the inbound stream (by device B) constitutes an inbound error correction strategy.

At a given time, for a given error correction scheme, either at least one correction strategy is applied, or none is applied.

For instance, the error correction strategies are selected from a group of error correction strategies. For instance, the group of error correction strategies comprises three strategies S1, S2 and S3, and an element S0 which corresponds to no strategy being applied.

Alternatively, they are selected from the group consisting of strategies S1, S2 and S3.

For instance, S1 is a bitrate strategy, S2 is a replication strategy and S3 is a forward error correction strategy, known as FEC.

A bitrate strategy is a strategy in which the rate with which the packets of the multimedia data are sent by a device is variable and may be modified, i.e. increased or decreased. A bitrate strategy presents a bitrate value, which corresponds to the rate with which the packets are sent, comprised between a maximum bitrate and a minimum bitrate.

A replication strategy applied by a device, for instance device A, is a strategy in which a quantity of packets of the multimedia data sent by device A is replicated by device A, thereby forming original packets and replicated packets with the same content to be received by the other device, here device B. A replication strategy exhibits a percentage of replicated packets which corresponds to the number of received replicated packets whose original packets were not received, divided by the number of expected original packets. The percentage of replicated packets is inferior or equal to a maximum percentage of replicated packets.

A forward error correction strategy (or FEC strategy) is a strategy in which a given number of packets from the multimedia data are built so as to include additional information allowing the reconstruction of missing or erroneous packets. A forward error correction strategy presents a percentage of such packets, herein labelled as FEC packets, used to correct errors. This percentage, or FEC packets percentage, corresponds to the number of FEC packets used to correct errors as a percentage of the number of total packets received over a time window. If there are replicated packets, the number of total packets sent does not take into account the replicated packets. The FEC packets percentage has a maximum value.

In a known manner, the packets added or modified due to the implementation of a strategy are used by the device on the receiving end of the error correction strategy to correct data packet errors.

As will be made more apparent hereinafter, the purpose of the invention is to propose a method of managing the outbound error correction scheme of a given device with a view of increasing the quality of the communication between these devices in a more efficient manner.

In addition to the multimedia data, the devices exchange quality of service data QoSD, or QoS data QoSD. More precisely, the device A sends QoS data QoSDA to the device B, and the device B sends QoS data QoSDB to the device A.

The QoS data are indicative of the quality of the communication for the device that sends them. In other words, they are representative of the quality of the communication as perceived by the device that sends the QoS data.

For instance, the QoS data are in the form of packets exchanged using RTCP, for Real-Time Transport Control Protocol. For instance, the packets of the quality data are also UDP packets. The RTP and RTCP protocols are illustrated by different lines on Figure 1.

The QoS data are organized as reports R known as RTCP Sender Reports and exchanged using RTCP. These reports are repeatedly generated by the devices and sent to the other device.

The interval between two consecutive reports, or report interval, has a duration of a few seconds. For instance, the reports are sent every five seconds or so. The exact duration of the interval between two consecutive reports may be randomized to prevent unintended synchronization effects.

For a given device, for instance device A, the interval between two consecutive received reports R may referred to as a time window.

For instance, each report R sent by the device B and received by the device A contains the following data:

- Jitter data representative of a jitter affecting the outbound stream OSA,
- Latency data representative of a latency affecting the outbound stream OSA, ,
- Packet loss data representative of a number of lost packets of the outbound stream OSA,
- error data representative of a number of errors detected in the packets of the outbound stream OSA, and
- corrected packets data, representative of a number of packets of the multimedia data that were corrected by device B due to the outbound error correction scheme being employed for the outbound stream OSA.

In a known manner, jitter is a phenomenon through which packets arrive in a disorderly manner. Jitter is for instance caused by network effects, such as congestion.

Latency represents the time needed for packets to arrive to their destination.

Packet loss represents a number of packets which do not get to their destination.

When a plurality of strategies are employed, the corrected packets data may include corrected packets data respectively representative of a number of packets that were corrected due to each strategy, and/or combined corrected packets data representative of a total number of corrected packets due to all the strategies being employed.

The reports R may contain additional data, such round-trip delay time data, and transmitted packet count data which represent the number of packets which were sent to the device B.

For instance, the data of a given report R correspond to the phenomena observed during the time window at the end of which the report is sent, or to a previous time window.

Regarding Figure 1, in which the letter A designates a component of device A and the letter B designates a component of device B, each device A, B is an electronic communication device. For instance, the devices A, B are included in the following elements: a cellphone such as a smartphone, a wearable device, a smart TV, an automobile entertainment system, a video game console or a tablet computer.

Each device A, B comprises a microphone MA, MB for capturing audio data, a camera CAMA, CAMB for capturing video data, a speaker SA, SB for rendering audio data, a screen SCA, SCB for displaying video data and a communication interface IA, IB connected to the network N for sending to and receiving from the other device B, A the multimedia data in the form of the outbound stream and inbound stream respectively.

Each device further comprises a processor CPUA, CPUB and a memory MEMA, MEMB for storing computer programs whose execution by the corresponding processor CPUA, CPUB allows the corresponding device A, B to operate.

Each memory MEMA, MEMB comprises a buffer memory BUFFA, BUFFB for storing the data of the inbound stream ISA, ISB. In fact, over a given time window, the multimedia data received by a given device A, B are stored in the buffer memory BUFFA, BUFFB for further processing. This processing, described hereinafter, may be carried out during the subsequent time window. Once the processing has been carried out, the content of the buffer memory is deleted, and new multimedia data are then stored in the buffer memory.

In addition, each device A, B comprises a media engine MEA, MEB. Each media engine MEA, MEB comprises a coder-decoder module A, B, or CODEC A, B.

Each CODEC A, B is configured to build the multimedia data from the output of the microphone MA, MB and/or of the camera CAMA, CAMB and to process the multimedia data sent by the other device with a view to output the audio and/or video data via the speaker SA, SB and/or the screen SCA, SCB. In particular, the CODEC A, B uses the packets that have been modified (if any) by the strategy applied by the sending device, i.e. the other device, so as to process the received multimedia data. For instance, the CODEC A, B are software modules processed by the corresponding processor CPUA, CPUB, of the device. Each CODEC may implement normalized processes of coding and/or decoding data.

Each device A, B further comprises a bitrate driver BRDA, BRDB for the implementation of the bitrate strategy S1. Each bitrate drive BRDA, BRDB is for instance configured to modify the bitrate with which the corresponding device sends the packets of multimedia data. For instance, the bitrate drivers are software modules.

Each device A, B further comprises a Quality of Service Management module QoSMA, QoSMB configured to apply the corresponding error correction scheme to their outbound stream to improve the quality of the communication between the two devices A, B.

The modules QoSMA and QoSMB are configured to apply and manage the outbound error correction scheme relative to their respective device.

The module QoSMA is configured to manage the outbound error correction scheme as a function of the inbound error correction scheme managed by the module QoSMB.

To that end, the module QoSMA is configured to generate the data packets that may be required by the error correction strategy currently employed in the scheme (such as duplicated packets or FEC packets), and to command the bitrate driver for the need of the bitrate strategy, and to at least partly manage the inclusion of the additional packets in the outbound stream OSA.

Furthermore, the module QoSMA is configured to generate inbound error correction scheme effectiveness data $ED_{ISA}$. These data $ED_{ISA}$ are generated as a function of the multimedia data of the inbound stream ISA. These data $ED_{ISA}$ are representative of an effectiveness of the inbound error correction strategy, i.e. the error correction scheme applied by device B.

The data $ED_{ISA}$ for instance comprise:

- an inbound jitter parameter $j_{ISA}$ having a value indicative of the jitter affecting the inbound stream,

- an inbound latency parameter $l_{ISA}$ having a value indicative of the latency of the inbound stream, and

- an inbound packet loss parameter $pl_{ISA}$ having a value indicative of a packet loss affecting data packets of the inbound stream.

The data $ED_{ISA}$ further comprise an inbound effectiveness parameter $eff_{ISA}$. This effectiveness parameter $eff_{ISA}$ is specifically indicative of a number of packets $pc_{ISA}$ of the inbound stream ISA which have been corrected using the error correction strategy of the inbound error correction scheme, relative to a number $ec_{ISA}$ of errors in the data packets of the inbound stream.

For instance, the effectiveness parameter $eff_{ISA}$ has a value determined as a function of a ratio between the number of corrected data packets $pc_{ISA}$ of the inbound stream which were corrected using the inbound error correction strategy, and the number $ec_{ISA}$.

For instance, the value of the effectiveness parameter $eff_{ISA}$ is chosen equal to $100*pc_{ISA}/ec_{ISA}$.

The details of the determination of the values of these parameters is given below.

The module QoSMA is further configured to generate outbound error correction scheme effectiveness data $ED_{OSA}$. These data are indicative of an effectiveness of the outbound error correction strategy. These data are generated as a function the quality of service data QoSDB sent by the second device B.

The data $ED_{OSA}$ for instance comprise:

- an outbound jitter parameter $j_{OSA}$ having a value indicative of the jitter affecting the outbound stream,

- an outbound latency parameter $l_{OSA}$ having a value indicative of the latency of the outbound stream, and

- an outbound packet loss parameter $pl_{OSA}$ having a value indicative of a packet loss affecting data packets of the outbound stream.

The value of these three parameters is advantageously respectively determined based on the jitter data, the latency data and packet loss data of the reports R received by the device A.

The data $ED_{OSA}$ further comprise an outbound effectiveness parameter $eff_{OSA}$. This effectiveness parameter $eff_{OSA}$ is specifically indicative of a number of packets of the outbound stream OSA which have been corrected relative to a number $ec_{OSA}$ of errors in the data packets of the outbound stream.

The effectiveness parameter $eff_{OSA}$ has a value determined as a function of a ratio between a number of corrected data packets $pc_{OSA}$ of the inbound stream which were corrected using the inbound error correction strategy, and the number $ec_{OSA}$.

For instance, the number of corrected data packets $pc_{OSA}$ is determined based on the corrected packets data of the report R. The number $ec_{OSA}$ is for instance determined based on the error data of the report R.

For instance, the value of the effectiveness parameter $eff_{OSA}$ is chosen equal to $100*pc_{OSA}/ec_{OSA}$.

Furthermore, the module QoSMA is configured to modify the outbound error correction scheme as a function of the inbound correction strategy effectiveness data $ED_{ISA}$ and the outbound correction strategy effectiveness data $ED_{OSA}$.

As will be described below, modifying the outbound error correction scheme may comprise employing an outbound error correction strategy when none was employed beforehand, replacing the current outbound error correction strategy by another, or ceasing to employ an outbound error correction strategy.

In case modifying the scheme includes employing an error correction strategy, the newly applied strategy is advantageously chosen as a function of the inbound error correction strategy employed. For instance, it is specifically chosen to correspond to the inbound error correction strategy.

The modalities of the modification of the outbound error correction scheme are detailed below.

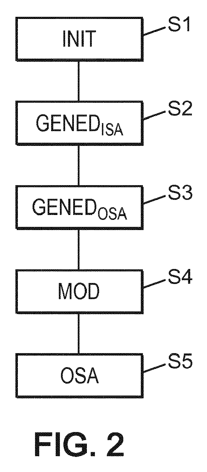

The method of communicating multimedia data between the two devices according to the invention will now be described in reference to Figure 2.

The method will be described for a configuration in which the communication between the two devices A, B is a voice communication without any video data. However, a transposition to other configurations, in particular to configurations including video data as well, is immediately derivable from the following description.

Initially, during a step S1, the communication between the devices A and B over the network N is initiated.

For instance, to that end, an invitation is sent by device A via SIP signaling via the SBC and the proxy server PS to device B. The proxy server then validates that device A is enabled to communicate with device B, the accounting server thereby starting the process of counting the duration of the communication.

Once the communication is established, the device A repeatedly sends to the device B multimedia data in the form of the outbound stream OSA, and the quality of service data QoSDA in the form of reports R.

The device B repeatedly sends to the device A multimedia data in the form of the inbound stream ISA, and the quality of service data QoSDB in the form of reports R. Moreover, each device A, B applies its error correction scheme to its outbound stream.

For instance, initially or after a given amount of time, the inbound error correction scheme relative to device A comprises one active error correction strategy.

During a step S2, the module QoSMA generates the inbound error correction strategy effectiveness data $ED_{ISA}$ for the current time window. These data are generated based on the inbound stream ISA received during a given time window.

To that end, the multimedia data of the inbound stream ISA which are received are stored in the buffer memory BUFFA by the processor CPU. For instance, they are stored in a sub-memory of the buffer BUFFA known as a jitter buffer.

The module QoSMA then scans the inbound stream data stored in the buffer memory.

From the scanning of these stored data, the module QoSMA determines the value of the inbound jitter parameter

$j_{ISA}$. To that end, for instance, the module QoSMA processes timestamps that the data packets stored in the buffer memory BUFFA contain, such as timestamps indicative of a time at which they were sent, and determines the value of the parameter $j_{ISA}$ from time differences between subsequent packets determined based on these timestamps.

Moreover, the module QoSMA determines the value of the inbound latency parameter $l_{ISA}$ from the stored data. For instance, to that end, the module QoSMA processes the timestamps of the data packets and determines the value of the parameter $l_{ISA}$ based on these timestamps, for instance based on differences between timestamps indicative of the time of emission of the data packets and timestamps indicative of their time of reception.

In addition, the module QoSMA determines the value of the inbound packet loss parameter. For instance, this determination is carried out by processing packet headers that the packets stored in the buffer contain.

Furthermore, the module QoSMA determines the number $ec_{ISA}$. For instance, this determination is carried out by defining for jitter and latency a corresponding threshold value, by processing the data of each packet to associate to said packet a jitter value and a latency value, and by counting each packet for which the jitter value or the latency value is greater than its corresponding threshold value as one error.

Each packet for which both the jitter value and the latency value are greater than the associated threshold value may be seen as one error, or two separate errors.

Regarding packet loss, each packet which never reached the device A is counted as an error.

The number $ec_{ISA}$ is then determined based on the total number of errors thus counted for jitter, latency and packet loss. For instance, it is taken equal to this number.

Once the values of these parameters have been determined, the module QoSMA reorders the data packets in the right chronological order.

The module then determines if the data contain error correction data, i.e. packets whose presence in due to an error correction strategy being employed. These packets are for instance in the form of duplicated packets or FEC packets including modified data to provide a data redundancy.

If such packets are discovered, the module QoSMA determines the nature of the strategy that is employed and memorizes the current inbound strategy, and proceeds to correct the errors using the packets present due to the strategy being employed.

After that, the module QoSMA determines the value of the inbound effectiveness parameter $eff_{ISA}$.

To that end, the module QoSMA determines the value of the parameter $pc_{ISA}$. This value is determined based on the corrections of the data which were previously carried out.

Once this value is obtained, the module QoSMA determines the value of the inbound effectiveness parameter based on the value of the parameter $pc_{ISA}$.

For instance, it is determined as the value of the ratio $100 \times pc_{ISA}/ec_{ISA}$. For instance, in a configuration in which 10 packets of the inbound stream ISA have been determined as counting as errors by the module QoSMA, and 5 of these errors were corrected, the value of the parameter $eff_{ISA}$ is 50%.

It should be noted that when the inbound error correction scheme contains no strategy, the value of the parameter $pc_{ISA}$ is equal to 0. The value of the inbound effectiveness parameter $eff_{ISA}$ is for instance taken equal to its maximum value if the value of the parameter $pl_{ISA}$ is equal to zero, and is taken equal to 0 if the parameter $pl_{ISA}$ has a value different from 0.

After the inbound error correction scheme effectiveness data $ED_{ISA}$ have been generated, the media engine MEA processes the data in the buffer memory BUFFA with a view to render their content for the user of the device A using the speaker SA.

At the end of step S2, which for instance coincides with the end of the current time window, the QoSMA generates the report R for the time window. The data the report R is generated based on the data $ED_{ISA}$, at least in part. For instance, the jitter data, latency data and packet loss data are generated based on the values of the parameters $j_{ISA}$, $l_{ISA}$, $pl_{ISA}$ respectively. The data of the reports for instance includes these values. Moreover, the corrected packets data of the report are generated based on the value of the corrected data packets parameter $pc_{ISA}$. In addition, the error data are generated based on the number $ec_{ISA}$.

During a step S3, the module QoSMA determines the outbound error correction scheme effectiveness data $ED_{OSA}$.

This step is for instance triggered in response to the reception of a report R from device B.

These reports sent by device B are for instance generated in a fashion similar to that by which the report sent by device A is generated at the end of step S2.

In step S3, the module QoSMA determines the values of the parameters $j_{OSA}$, $l_{OSA}$, $pl_{OSA}$ based on the content of the outbound jitter data, outbound latency data and outbound packet loss data contained in the report R received from device B.

Moreover, the module QoSMA determines the value of the parameter $eff_{OSA}$ based on the content of the corrected packets data of the report R. More precisely, these data are used to generate the value of the parameter $pc_{OSA}$, from which the value of the parameter $eff_{OSA}$ is determined. Furthermore, it determines the value of the number

$ec_{OSA}$ based on the error data of the received report.

The parameter $eff_{OSA}$ is then determined as equal to the value of the expression $100*pc_{OSA}/ec_{OSA}$.

In a step S4, the module QoSMA modifies the outbound error correction scheme based on the data $ED_{ISA}$ and $ED_{OSA}$.

More precisely, the module QoSMA determines that the outbound error correction scheme needs modifying in response to an effectiveness condition being verified. In other words, it modifies the scheme when at least the effectiveness condition is fulfilled.

This effectiveness condition relates to the respective values of the parameters $eff_{OSA}$ and $eff_{ISA}$.

For instance, this condition is verified when a difference between the value of the inbound effectiveness parameter $eff_{ISA}$ and the value of the outbound effectiveness parameter is equal or greater than a predetermined threshold $eff_{th}$.

The value of the threshold $eff_{th}$ is chosen to prevent undesirable rapid flips between a configuration in which the difference is greater than the threshold to a configuration in which it is smaller.

If the module QoSMA determines that the effectiveness correction is verified, it determines that the inbound strategy is more efficient than the outbound strategy.

In this situation, the module QoSMA modifies the outbound error correction scheme.

For instance, to that end, it applies an error correction strategy to the outbound stream if none was applied before. If one was applied before, the strategy which was applied is interrupted, and a new strategy is applied. For instance, the new strategy is preselected in the group of possible strategies S0, S1, S2, S3 (the new strategy being different from the one previously applied).

Preferentially, the new outbound error correction strategy corresponds to the inbound error correction strategy.

In an advantageous embodiment, when the module QoSMA determines that the effectiveness condition is fulfilled, it determines that the outbound error correction scheme needs modifying only if a further similarity condition is fulfilled. If this similarity condition is not fulfilled, the module QoSMA determines that the outbound error correction scheme should remain unchanged and does not modify the outbound error correction scheme.

The similarity condition is representative of the fact that the quality of the communication for the first device and the quality of the communication for the second device are within a predetermined range from one another.

For instance, the similarity condition is fulfilled when a sum of respective relatives gaps between:

- the value of the outbound jitter parameter $j_{OSA}$ and the value of the inbound jitter parameter $j_{ISA}$,

- the value of the outbound latency parameter $l_{OSA}$ and the value of the inbound latency parameter $l_{ISA}$, and

- the value of the outbound packet loss parameter $pl_{OSA}$ and the value of the inbound packet loss parameter $pl_{ISA}$,

is equal or inferior to a predetermined value s.

For instance, the relative gaps considered are absolute values.

For instance, the similarity condition is fulfilled when the following relationship is verified

$$\left|\frac{j_{OSA} - j_{ISA}}{j_{OSA}}\right| + \left|\frac{l_{OSA} - l_{ISA}}{l_{OSA}}\right| + \left|\frac{pl_{OSA} - pl_{ISA}}{pl_{OSA}}\right| \le s$$

Advantageously, if both the similarity condition and the effectiveness condition are met, the module QoSMA modifies the outbound error correction scheme as described above.

In cases in which these strategies are the same strategy from the group of strategies (and therefore may both correspond to a lack thereof), the outbound error correction strategy is maintained.

In a step S5, if at least one strategy S1, S2, S3 is applied, the module QoSMA generates additional data for the implementation of the strategy for allowing corrections of data errors by the device B, and generates the outbound stream based on these data and voice input from the user captured using the microphone MA. This voice input is processed by the media engine MEA and, along with these additional data generated for the purpose of correcting errors, transformed into the outbound stream.

It should be noted that given that the data $ED_{OSA}$ are determined based on a report R which may arrive at or after the end of the time window during which the data $ED_{ISA}$ have been determined, the data $ED_{OSA}$ and $ED_{ISA}$, which preferably refer to a same time window, may be processed in different time windows.

The method according to the invention presents several advantages.

It allows an efficient correction of errors in exchanged multimedia data, while reducing the amount of processing resources required to that end, by coupling the error correction scheme applied by a given device to the data it outputs to the scheme applied by the device it communicates with to the data it receives.

This approach is all the more optimal as when two devices communication, they tend to encounter similar networks conditions and inconsistencies as the exchanged streams often follow similar network routings.

Moreover, the details of the method rely on a small amount of data which are obtained at least in part from data relied on in methods of communicating data of the prior art. Therefore, the invention may easily be retrofitted on preexisting devices.

The invention also relates to a computer program PRG containing instructions whose execution by a processor causes the implementation of the method according to the invention.

For instance, the program PRG is contained in the memory MEMA of the first device A.

## Claims

1. A method for communicating multimedia data between a first device and a second device over a network (N), the first device (A) receiving an inbound stream (ISA) of multimedia data from the second device (B) and sending an outbound stream (OSA) of multimedia data to the second device, the first device being adapted for applying an outbound error correction scheme to the outbound stream (OSA) for improving a quality of the communication between the first and second devices (A, B), said outbound error correction scheme being adapted to comprise at least one outbound error correction strategy applied to said outbound stream (OSA) for correcting data packet errors in the outbound stream, the second device (B) being adapted for applying an inbound error correction scheme to the inbound stream for improving said quality, said inbound error correction scheme being adapted to comprise at least one inbound error correction strategy applied to said inbound stream for correcting data packet errors in the inbound stream, the method comprising the steps of:

   - generating (S2) inbound error correction scheme effectiveness data ($ED_{ISA}$) as a function of the multimedia data of the inbound stream (ISA), said inbound error correction scheme effectiveness data ($ED_{ISA}$) being representative of an effectiveness of the inbound error correction scheme on said quality,
   - receiving quality of service data (QoSDB) from the second device (B), said quality of service data being indicative of the quality of the communication,
   - generating (S3), based on said quality of service data, outbound error correction scheme effectiveness data ($ED_{OSA}$) indicative of an effectiveness of the outbound error correction scheme on said quality, and
   - modifying (S4) the outbound error correction scheme as a function of said inbound error correction scheme effectiveness data and outbound error correction scheme effectiveness data.

2. The method according to claim 1, wherein prior to modifying the outbound error correction scheme, the inbound error correction scheme comprises at least one inbound error correction strategy applied to the inbound stream (ISA), and wherein modifying the outbound error correction scheme comprises applying the inbound error correction strategy to the outbound stream (OSA).

3. The method according to claim 2, wherein prior to modifying the outbound error correction scheme, the outbound correction scheme comprises at least one outbound error correction strategy, and wherein modifying the outbound error correction scheme comprises applying the inbound error correction strategy to the outbound stream instead of the outbound error correction strategy.

4. The method according to claim any one of the preceding claims, wherein the inbound error correction scheme effectiveness data comprise:

   - an inbound jitter parameter ($j_{ISA}$) having a value indicative of a jitter affecting the inbound stream,
   - an inbound latency parameter ($l_{ISA}$) having a value indicative of a latency of the inbound stream, and
   - an inbound packet loss parameter ($pl_{ISA}$) having a value indicative of a packet loss affecting data packets of the inbound stream.

5. The method according to claim 4, wherein the inbound error correction scheme effectiveness data further comprise an inbound effectiveness parameter ($eff_{ISA}$) having a value determined as a function of a ratio between a number ($pc_{ISA}$) of corrected data packets of the inbound stream using the inbound error correction scheme, and a number ($ec_{ISA}$) of errors in data packets of the inbound stream (ISA).

6. The method according to any one of the preceding claims, wherein the outbound error correction scheme effectiveness data comprise:

- an outbound jitter parameter ($j_{OSA}$) having a value indicative of a jitter affecting the outbound stream,
- an outbound latency parameter ($l_{OSA}$) having a value indicative of a latency of the outbound stream, and
- an outbound packet loss parameter ($pl_{OSA}$) having a value indicative of a packet loss affecting data packets of the outbound stream.

7. The method according to claim 6, wherein the outbound error correction scheme effectiveness data ($ED_{OSA}$) further comprise an outbound effectiveness parameter ($eff_{OSA}$) having a value determined as a function of a ratio between a number ($pc_{OSA}$) of corrected data packets of the outbound stream using the outbound error correction scheme, and a number ($ec_{OSA}$) of errors in data packets of the outbound stream (OSA).

8. The method according to claims 5 and 7, wherein modifying the outbound error correction scheme comprises determining that the outbound error correction scheme needs modifying as a function of at least a verification of an effectiveness condition, said effectiveness condition being verified when a difference between the value of the inbound effectiveness parameter and the value of the outbound effectiveness parameter is equal or greater than a predetermined threshold ($eff_{th}$).

9. The method according to any one of the preceding claims, wherein modifying the outbound error correction scheme comprises determining that the outbound error correction scheme needs modifying as a function of at least a verification of a similarity condition, said similarity condition being representative of a fact that a quality of the communication for the first device and a quality of the communication for the second device are within a predetermined range from one another.

10. The method according to claims 4, 6 and 9, wherein the similarity condition is fulfilled when a sum of respective relatives gaps between:

- the value of the outbound jitter parameter ($j_{OSA}$) and the value of the inbound jitter parameter ($j_{ISA}$),
- the value of the outbound latency parameter ($l_{OSA}$) and the value of the inbound latency parameter ($l_{ISA}$), and
- the value of the outbound packet loss parameter ($pl_{OSA}$) and the value of the inbound packet loss parameter ($pl_{ISA}$),

is equal or inferior to a predetermined value.

11. The method according to any one of the preceding claims, wherein the quality of service data comprise Real-time Transport Control Protocol data, or RTCP data, arranged in RTCP reports (R) repeatedly sent by the second device to the first device.

12. A computer program containing instructions for the implementation of the method according to any one of the preceding claims when executed by a processor.

13. A quality of service management module adapted to manage a quality of communication of multimedia data between a first device (A) and a second device (B) over a network (N), the first device being configured to receive an inbound stream (ISA) of multimedia data from the second device and to send an outbound stream (OSA) of multimedia data to the second device (B), the first device being adapted for applying an outbound error correction scheme to the outbound stream for improving a quality of the communication between the first and second devices, said outbound error correction scheme being adapted to comprise at least one outbound error correction strategy applied to said outbound stream for correcting data packet errors in the outbound stream (OSA), the second device being adapted for applying an inbound error correction scheme to the inbound stream (ISA) for improving said quality, said inbound error correction scheme being adapted to comprise at least one inbound error correction strategy applied to said inbound stream for correcting data packet errors in the inbound stream, the quality of service management module being configured to:

- generate inbound error correction scheme effectiveness data ($ED_{ISA}$) as a function of the multimedia data of the inbound stream, said inbound error correction scheme effectiveness data ($ED_{ISA}$) being representative of an effectiveness of the inbound error correction strategy,
- generate outbound error correction scheme effectiveness data ($ED_{OSA}$) indicative of an effectiveness of the outbound error correction scheme based on quality of service data (QoSDB) sent by the second device (B), said quality of service data being indicative of the quality of the communication,
- modify the outbound error correction scheme as a function of said inbound error correction scheme effectiveness data ($ED_{ISA}$) and outbound error correction scheme effectiveness data ($ED_{OSA}$).

14. A communication device, said communication device comprising a quality of service management module according to claim 13.

$$ED_{ISA} (j_{ISA}, l_{ISA}, pl_{ISA}, eff_{ISA}, pc_{ISA}, ec_{ISA})$$

$$ED_{OSA} (j_{OSA}, l_{OSA}, pl_{OSA}, eff_{OSA}, pc_{OSA}, ec_{OSA})$$

FIG. 1

EP 3 182 627 A1

FIG. 2

Europäisches
Patentamt

European
Patent Office

Office européen
des brevets

# EUROPEAN SEARCH REPORT

Application Number

EP 15 30 7061

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 228 861 B1 (NIX JOHN A [US]) 24 July 2012 (2012-07-24) * columns 20-22; figures 1a, 1b, 3-5 * | 1-14 | INV.<br>H04L1/00<br>H04L1/20<br>H04L29/06 |
| A | EP 1 202 487 A2 (TOSHIBA KK [JP]) 2 May 2002 (2002-05-02) * paragraphs [0012] - [0016], [0027], [0033], [0035], [0042], [0048], [0080] * | 1-14 | |
| A | US 2006/150055 A1 (QUINARD FABRICE M R [US] ET AL) 6 July 2006 (2006-07-06) * paragraphs [0008], [0010], [0014], [0034], [0036], [0040], [0043], [0047], [0050] * | 1-14 | |
| A | EP 1 168 732 A1 (MITSUBISHI ELECTRIC CORP [JP]) 2 January 2002 (2002-01-02) * paragraphs [0003], [0014], [0032], [0033] * | 1-14 | TECHNICAL FIELDS SEARCHED (IPC) |
| A | WO 2005/074175 A1 (SK TELECOM CO LTD [KR]; UNIV YONSEI SEOUL [KR]; LEE CHUL-HEE [KR]; RHI) 11 August 2005 (2005-08-11) * page 3, line 14 - page 7, line 16 * | 1-14 | H04L |

The present search report has been drawn up for all claims

| Place of search | Date of completion of the search | Examiner |
|---|---|---|
| The Hague | 15 June 2016 | Miclea, Sorin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 15 30 7061

This annex lists the patent family members relating to the patent documents cited in the above-mentioned European search report.
The members are as contained in the European Patent Office EDP file on
The European Patent Office is in no way liable for these particulars which are merely given for the purpose of information.

15-06-2016

| Patent document cited in search report | | Publication date | Patent family member(s) | | Publication date |
|---|---|---|---|---|---|
| US 8228861 | B1 | 24-07-2012 | US | 8228861 B1 | 24-07-2012 |
| | | | US | 8305980 B1 | 06-11-2012 |
| | | | US | 8493931 B1 | 23-07-2013 |
| | | | US | 2013170471 A1 | 04-07-2013 |
| EP 1202487 | A2 | 02-05-2002 | DE | 60118493 T2 | 14-09-2006 |
| | | | EP | 1202487 A2 | 02-05-2002 |
| | | | JP | 3699910 B2 | 28-09-2005 |
| | | | JP | 2002204278 A | 19-07-2002 |
| | | | US | 2002053053 A1 | 02-05-2002 |
| | | | US | 2005257111 A1 | 17-11-2005 |
| | | | US | 2006015783 A1 | 19-01-2006 |
| | | | US | 2006085725 A1 | 20-04-2006 |
| | | | US | 2007223449 A1 | 27-09-2007 |
| | | | US | 2007223503 A1 | 27-09-2007 |
| | | | US | 2007223583 A1 | 27-09-2007 |
| | | | US | 2007223584 A1 | 27-09-2007 |
| | | | US | 2007223586 A1 | 27-09-2007 |
| US 2006150055 | A1 | 06-07-2006 | CA | 2594121 A1 | 13-07-2006 |
| | | | CN | 101124728 A | 13-02-2008 |
| | | | EP | 1834409 A2 | 19-09-2007 |
| | | | JP | 2008527862 A | 24-07-2008 |
| | | | US | 2006150055 A1 | 06-07-2006 |
| | | | WO | 2006074408 A2 | 13-07-2006 |
| EP 1168732 | A1 | 02-01-2002 | CN | 1363165 A | 07-08-2002 |
| | | | EP | 1168732 A1 | 02-01-2002 |
| | | | JP | 3841256 B2 | 01-11-2006 |
| | | | JP | 2001230809 A | 24-08-2001 |
| | | | WO | 0161942 A1 | 23-08-2001 |
| WO 2005074175 | A1 | 11-08-2005 | CN | 1938972 A | 28-03-2007 |
| | | | EP | 1709759 A1 | 11-10-2006 |
| | | | JP | 2007524299 A | 23-08-2007 |
| | | | KR | 20050077679 A | 03-08-2005 |
| | | | US | 2007161351 A1 | 12-07-2007 |
| | | | WO | 2005074175 A1 | 11-08-2005 |

EPO FORM P0459

For more details about this annex : see Official Journal of the European Patent Office, No. 12/82